Europäisches Patentamt

European Patent Office

Office européen des brevets

(19)

(11) Veröffentlichungsnummer: **0 160 938**
**A2**

(12) # EUROPÄISCHE PATENTANMELDUNG

(21) Anmeldenummer: 85105365.2

(22) Anmeldetag: 02.05.85

(51) Int. Cl.⁴: **G 03 B 15/00**

(30) Priorität: 05.05.84 DE 3416651

(43) Veröffentlichungstag der Anmeldung:
13.11.85 Patentblatt 85/46

(84) Benannte Vertragsstaaten:
DE FR GB IT

(71) Anmelder: Steinheil-Lear Siegler AG
Osterfeldstrasse 82
D-8045 Ismaning(DE)

(72) Erfinder: Reutinger, Eduard
Waldwiesenstrasse 9
D-8000 München 70(DE)

(72) Erfinder: Schöps, Artur
Vorderegglburg 24
D-8017 Ebersberg(DE)

(74) Vertreter: Pätzold, Herbert, Dr.-Ing.
Widenmayerstrasse 49
D-8000 München 22(DE)

(54) Photographische Vorrichtung, insbesondere Foto-Monitor für stehende Bilder.

(57) Photographische Vorrichtung, insbesondere Foto-Monitor für stehende Bilder, die über eine Optik auf einem kohlebeschichteten lichtempfindlichen Material abgebildet werden, wobei zur Entwicklung des latenten Bildes auf dem lichtempfindlichen Material an seine Kohlewiderstandsschicht eine Spannung einer elektrischen Stromquelle angelegt wird. Erfindungsgemäß ist der Ort der Entwicklung (5) des lichtempfindlichen Papiers (9) von dem Ort seiner Belichtung (2) räumlich getrennt. Vorzugsweise ist die Einrichtung zum Abschneiden von Materialabschnitten zwischen dem Ort der Belichtung und dem Ort der Entwicklung angeordnet. Zum Absaugen der Dämpfe aus dem Ort der Entwicklungsstation kann ein Gebläse (18) vorhanden sein.

EP 0 160 938 A2

./...

Abb. 2

Steinheil-Lear Siegler AG
8045 Ismaning/München


Photographische Vorrichtung, insbesondere
Foto-Monitor für stehende Bilder


Photographische Vorrichtung, insbesondere Foto-Monitore
für stehende Bilder sind allgemein bekannt. Das z.B. auf
dem Leuchtschirm eines Monitors entworfene Bild wird durch
eine Optik auf ein lichtempfindliches Material abgebildet.
Nach der Belichtung wird das latente Bild durch Entwickeln
sichtbar gemacht.

Bei dem bekannt Dry-Silver-Papier der Firma 3M geschieht
dies durch Erwärmen. Hierzu ist die Rückseite mit einer
Kohlewiderstandsschicht versehen. Durch Anlegen einer
Spannung an diese Schicht wird das Papier direkt erwärmt
und dadurch entwickelt und fixiert.

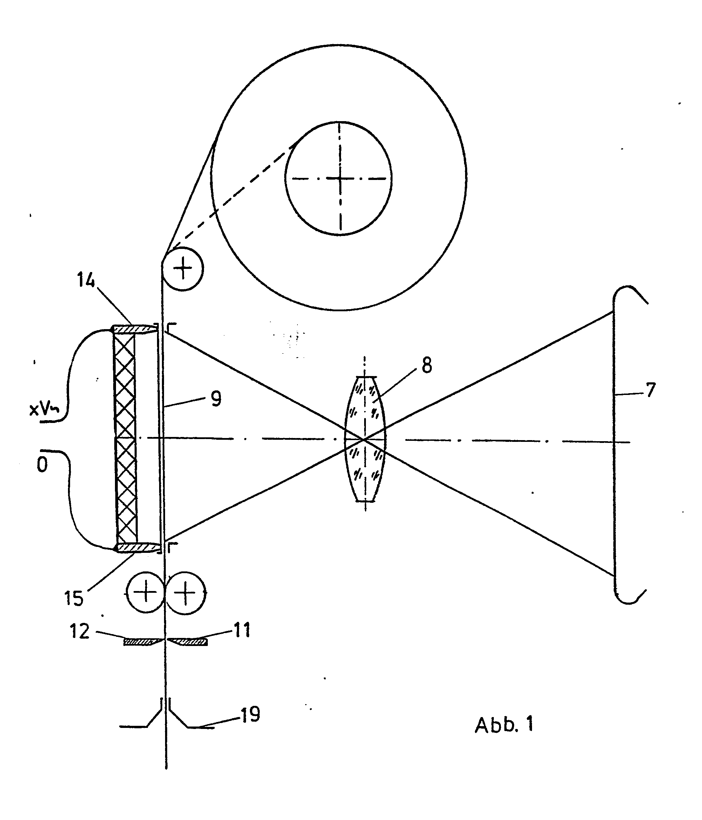

Es ist gemäß Fig. 1 ein Foto-Monitor 19 für dieses Dry-
Silver-Papier 9 bekannt, bei dem das auf dem Leuchtschirm
7 eines Monitors entworfene stehende Bild durch eine Optik
8 auf dem Dry-Silver-Papier 9 abgebildet wird. Das entwickelte Bild wird durch eine Schneideinrichtung 11, 12
von dem endlosen Papier abgeschnitten.
Die Entwicklung des latenten Bildes auf dem Papier 9 erfolgt durch Andrücken der Elektroden 14 und 15 am Ort der
Belichtung. Diese bekannte naheliegende Anordnung beansprucht wenig Platz, hat aber zwei erhebliche Nachteile:

-- Das nächste Bild kann erst belichtet werden, wenn das
   vorhergehende fertig entwickelt und anschließend
   transportiert ist. Rasch aufeinander folgende Bilder können damit nicht erfaßt werden.

-- Bei der raschen Erwärmung verdampft ein Teil der im Papier stets enthaltenen Feuchtigkeit, die die Korrosion aller umgebenden Teile begünstigen. Wenn sie sich auch nur zum kleinen Teil auf Spiegeln und/oder Linsen niederschlagen, wird die Bildqualität rapid verschlechtert.

Aufgabe der Erfindung ist es, eine Vorrichtung der eingangs genannten Art anzugeben, die eine Korrosion aufgrund der aus dem lichtempfindlichen Papier stammenden Feuchtigkeit vermeidet und ein Beschlagen der optischen Teile mit der Feuchtigkeit ausschließt.

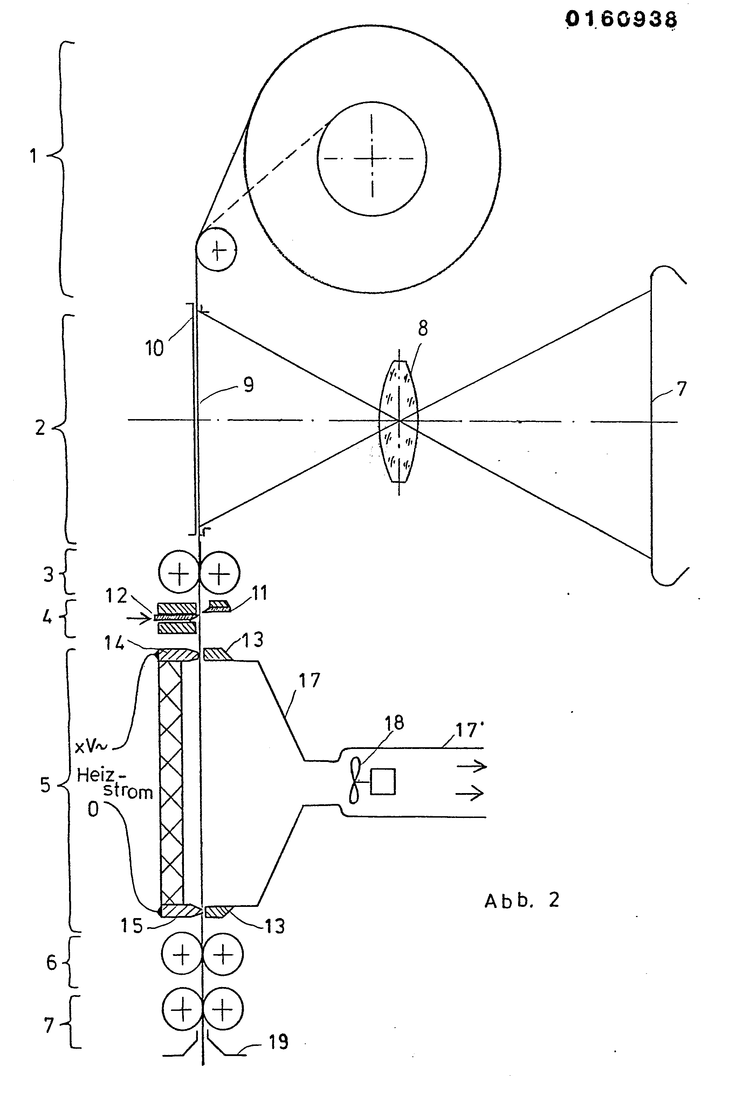

Die Aufgabe wird mit den kennzeichnenden Merkmalen des Ansporuches 1 gelöst. Vorteilhafte Ausführungen ergeben sich aus den Merkmalen der Unteransprüche. Ein Ausführungsbeispiel nach der Erfindung ist nachstehend anhand der Fig. 2 beschrieben, in der das Ausführungsbeispiel nur schematisch dargestellt ist.

Gemäß der erfindungsgemäßen Vorrichtung nach Fig. 2 ist der Ort der Belichtung ("Belichtungsstation 2") vom Ort der Entwicklung ("Entwicklungsstation 5") räumlich getrennt. Dadurch kann unmittelbar nach Abschluß der Belichtung das Papier 9 transportiert und sofort das nächste Bild belichtet werden, während das vorhergehende entwickelt wird. Außerdem kann die Optik 8 problemlos so abgeschirmt werden, daß sie von den bei der Entwicklung frei werdenden Papierdämpfen nicht mehr erreicht werden kann.

In einer weiteren Ausgestaltung der Erfindung ist nicht der Raum für die Optik 8 abgeschirmt, sondern die Entwicklungsstation ist mit einer Haube 17 versehen, die in ein an der Geräterückseite nach außen mündendes Rohr 17' übergeht. In diesem ist ein Lüfter 18 eingebaut, der die Dämpfe absaugt und nach außen befördert. Damit wird auch bei rasch aufeinander folgenden Aufnahmen zuverlässig verhindert, daß sich die Dämpfe stauen und in kaum definierbarer Weise ins Gerät kriechen.

Schließlich hat es sich als zweckmäßig erwiesen, die Schneideinrrichtung 11, 12 zum Abtrennen von einzelnen Bildern oder von beliebigen Bildfolgen nicht in bekannter Weise am Austritt des Papiers aus dem Gerät 19 anzuordnen, sondern zwischen Belichtungs- und Entwicklungsstation. Damit entsteht kein Papierverlust, auch wenn nur eine einzelne Aufnahme gemacht und entnommen wird.

Für eine Aufnahme mit erfindungsgemäßen Foto-Monitoren ergibt sich folgender Ablauf:
In der Belichtungsstation 2 befindet sich unbelichtetes Papier, das durch nicht näher dargestellte Führungsschienen in bekannter Weise plan gehalten wird. Eine nicht dargestellte Bedienungstaste "Bild" wird gedrückt. Dann bildet die Optik 8 den Schirm 7 des Monitors auf das Papier 9 ab und dieses wird belichtet. Nach Abschluß der Belichtung transportiert das von einem Elektromotor angetriebene Rollenpaar der ersten Transportstation 3 das Papier solange, bis der belichtete Teil sich in der Entwicklungsstation 5 befindet. Dann werden die beiden Elektroden 14 und 15 an die Rückseite des Papiers angedrückt, wobei die beiden Leisten 13 als Gegenlager dienen, und der Heizstrom wird eingeschaltet: Das Bild wird entwickelt. Ist die Entwicklung abgeschlossen, so wird der Heizstrom abgeschaltet, die Elektroden werden abgehoben und der Lüfter 18 wird für eine bestimmte zeit eingeschaltet.

Wird die weitere, nicht dargestellte Bedienungstaste "Schneiden" gedrückt, so trennt nunmehr das Messer in der Schneidestation 4 das Bild ab und das Walzenpaar der zweiten Transportstation 6 befördert es durch einen Austrittsschlitz an der Gerätefront des Foto-Monitors 19 nach außen. Durch das unmittelbar vor dem Austritt angeordnete, mit dem Schutzleiter verbundene Walzenpaar der Entladestation 7 wird sichergestellt, daß das nach außen gelangende Papier frei von elektrischen Ladungen ist. Nach Entnahme des Bildes ist der Ausgangszustand wieder hergestellt.

Wird die Bedienungstaste "Schneiden" nicht gedrückt, so entfallen die letzten Vorgänge. Nach dem Belichten des nächsten Bildes transportieren dann die Walen der Transportstationen im Synchronlauf das Papier. Dann ist wieder ein unbelichtetes Papier in der Belichtungsstation 5, belichtetes Papier wird entwickelt und ein fertiges, aber nicht abgeschnittenes Bild wird ausgeschoben.

Steinheil-Lear Siegler AG
8045 Ismaning/München


P a t e n t a n s p r ü c h e


1. Photographische Vorrichtung, insbesondere Foto-Monitor
für stehende Bilder mit einer optischen Einrichtung zur
Abbildung des stehenden Bildes auf einem kohlebeschichteten,
lichtempfindlichen Material, mit einer Einrichtung zum
Entwickeln des latenten Bildes durch Anlegen einer Spannung
einer elektrischen Stromquelle an die Kohlewiderstandsschicht und mit Einrichtungen zum Transport des Papiers
in Verbindung mit Einrichtungen zum wahlweise Abschneiden
eines Papierabschnittes mit wenigstens einem entwickelten Bild , dadurch gekennzeichnet, daß der Ort der
Entwicklung (5) des lichtempfindlichen Materials (9)
vom Ort seiner Belichtung (2) räumlich getrennt ist.

2. Photographische Vorrichtung nach Anspruch 1, dadurch
gekennzeichnet, daß die Einrichtung zum Abschneiden des
lichtempfindlichen Materials (9) zwischen dem Ort der
Belichtung (2) und dem der Entwicklung (5) angeordnet ist.

3. Photographische Vorrichtung nach Anspruch 1 und 2,
dadurch gekennzeichnet, daß ein Gebläse (18) zum Absaugen
der beim Entwickeln entstehenden Dämpfe nach außen vorgesehen ist.

Abb. 1

A b b. 2